# EUROPEAN PATENT SPECIFICATION

(11) **EP 3 748 458 B1**
(45) Date of publication and mention of the grant of the patent: **28.04.2021**
(21) Application number: 19177935.4
(22) Date of filing: 03.06.2019
(51) Int. Cl.: G05D 23/19, H02J 3/14

(54) **THERMAL STORAGE DEVICE CONTROLLER**
STEUERGERÄT FÜR WÄRMESPEICHERVORRICHTUNG
ORGANE DE COMMANDE DE DISPOSITIF DE STOCKAGE THERMIQUE

(43) Date of publication of application: 09.12.2020
(73) Proprietor: Siemens Schweiz AG, 8047 Zürich (CH)
(72) Inventor: Reichlin, Armin, 6043 Adligenswil (CH)
(74) Representative: Maier, Daniel Oliver

(56) References cited:
- EP-A1- 2 638 704
- WO-A1-2018/231932
- DE-A1-102013 003 469
- GB-A- 2 481 048
- US-A- 5 153 581
- US-A1- 2015 128 614

## Description

### Background

The present disclosure relates to optimizations for power systems such as rooftop photovoltaic systems. The present disclosure focuses on improved use of power from a local supply of renewable energy.

Buildings with installations for supplying renewable energy are now legion. Power supplied by such installations can, on the hand, be used locally. That is, power is obtained from a local supply of renewable energy and runs local appliances such as dishwashers, television apparatuses, building controllers, kitchen appliances etc.

Power from such installations can, on the other hand, be fed to the transmission and/or distribution grid. Power fed to a transmission and/or distribution grid is typically sold at a price that is less than the price of power obtained from such a grid. That is, power will be fed to the grid, if a local supply of renewable power exceeds a local demand for energy.

A European patent application EP2301129A2 was filed on 26 May 2009. The application EP2301129A2 was published on 30 March 2011. EP2301129A2 teaches a controller and a method for controlling a device connected to a power supply. The controller 14 of EP2301129A2 detects whether sufficient power from solar power generation is available in a power supply network 2. If sufficient power is available, a switch 21 activates an appliance 3, 4, 20. The patent application teaches that the appliance 3, 4, 20 can be a washing machine, a storage heater, or a freezer.

A patent application EP2580832A2 was filed on 10 June 2011 and was published on 17 April 2013. The European patent application EP2580832A2 deals with a thermal storage device controller. The controller 120, 520, 720 manages activation of a heating element 601 - 603, 745 within a thermal storage device 600, 740. The controller 120, 520, 720 receives a signal indicative of power available within an electricity grid from a network operator. A determination is then made whether to switch the heating element 601 - 603, 745 to take up available power. That determination is made in response to the signal from the network operator. The heating element 601 - 603, 745 is then selectively energised as a function of the status of the thermal storage device 600, 740.

A European patent application EP2911018A1 was filed on 24 February 2014 and was published on 26 August 2015. The patent application EP2911018A1 teaches a building automation system that uses a predictive model. EP2911018A1 discloses an approach wherein a reading is acquired from an input device such as a power meter, a water meter, an internet router, a temperature sensor, a light sensor etc. The reading is then used as an input to a predictive model 3. An output value of the predictive model 3 is then compared to a measured value 1 and causes of such deviations are identified 7.

A patent application GB2481048A was filed by BASIC HOLDINGS, IE on 10 June 2010. The application was published on 14 December 2011. GB2481048A deals with a thermal storage device controller.

Another patent application DE102013003469A1 was filed by tekmar Regelsysteme GmbH, 45257, Essen, DE on 4 March 2013. The application was published on 4 September 2014. DE102013003469A1 deals with a method for room- or building heating under partial use of renewable, volatile electrical energy. The method of DE102013003469A1 involves supplying electrical energy in electro-thermal storage for heating a room or a building by using a controller.

The present disclosure teaches a controller for a thermal storage device. The controller functions to detect if sufficient power from a local supplier of renewable energy is available. Energy available from the local supplier of renewable energy can then be fed to the thermal storage device.

### Summary

The present disclosure teaches a controller in accordance with claim 1. As the controller receives an indication of power being available from a renewable supply, the controller determines if the thermal storage device can absorb such power. In positive response of such determination, the controller energises a heating element and a cooling element inside the thermal storage device. The controller thus avoids feeding power to a transmission or distribution grid. Instead, power from a local supply of renewable energy is absorbed locally.

It is a related object of the instant disclosure to provide a controller, wherein the controller also responds to a lack of or even to an absence of power from an on-site renewable supply. The controller then responds by de-energising the heating element and/or the cooling element.

It is also a related object of the instant disclosure to provide a controller, wherein the controller factors in a schedule that specifies a start time for energising the heating and/or cooling element. In so doing, management of power available from a renewable supply becomes more nuanced.

It is still a related object of the instant disclosure to provide a controller, wherein the controller functions to delay activation of the thermal storage device. A delay inhibits load peaks caused by simultaneous activations of several thermal storage devices.

It is still a related object of the present disclosure to provide a controller for a thermal storage device, wherein temperatures such as local temperatures inside the thermal storage device are factored into decisions on connection to or on disconnection from a grid.

It is another object of the present disclosure to provide a controller for a thermal storage device operable to be controlled by a cloud service and/or by a grid operator.

It is still an object of the instant disclosure to provide a controller for a thermal storage device that makes full use of the digital communication capabilities of a controller.

### Brief description of the drawings

Various features will become apparent to those skilled in the art from the following detailed description of the disclosed non-limiting embodiments. The drawings that accompany the detailed description can be briefly described as follows:
FIG 1 is a schematic representation of a local grid having two thermal storage devices connected to the grid.
FIG 2 schematically illustrates a thermal storage device according to the instant disclosure.
FIG 3 schematically illustrates a thermal storage device according to the instant disclosure, the thermal storage device additionally comprising a cooling element.
FIG 4 schematically illustrates a local grid according to the instant disclosure, wherein a power bus functions also as a communication bus.

### Detailed description

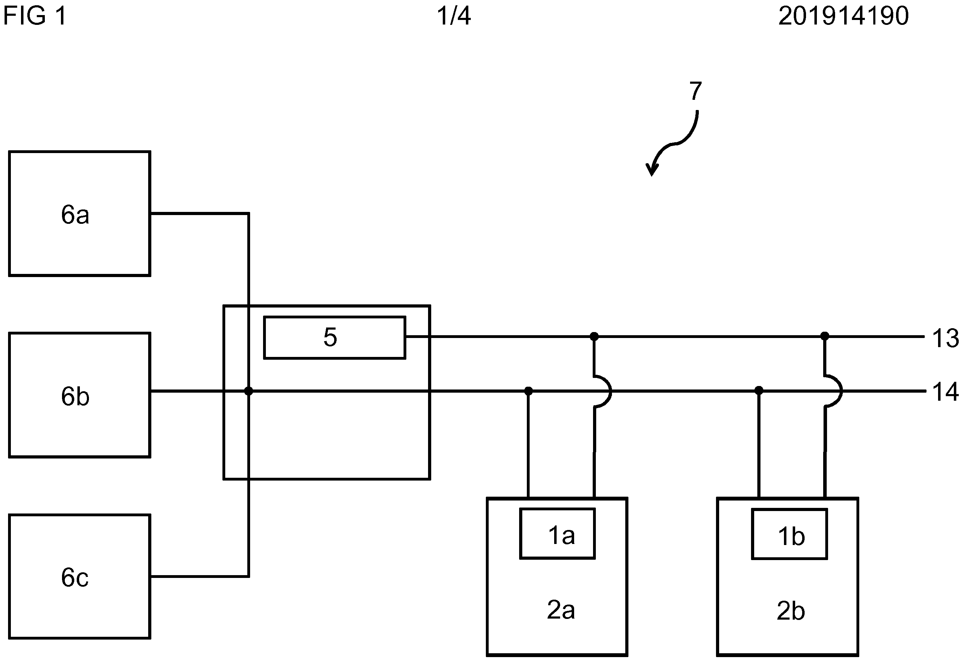

FIG 1 shows the various principal and optional components of a local electricity grid (7) of the instant disclosure. The local grid (7) comprises a supply of renewable power (6a, 6b, 6c). A power bus connects the supply of renewable power (6a, 6b, 6c) to a first thermal storage device (2a) and to a second thermal storage device (2b).

The local grid (7) also comprises a power management system (5) such as an energy management system and/or a building management system. The power management system (5) operates the local grid (7). The power management system (5) communicates with the controllers (1a, 1b) of the thermal storage devices (2a, 2b) via a communication bus (13).

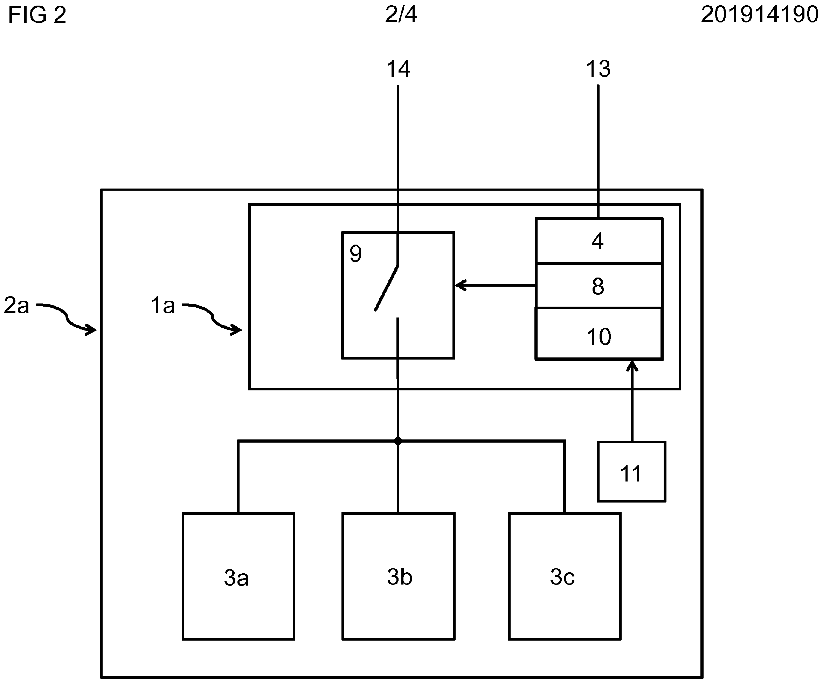

Now turning to FIG 2, an exemplary thermal storage device (2a) is illustrated. The thermal storage device (2a) comprises three heating elements (3a, 3b, 3c). The heating elements (3a, 3b, 3c) can be energised by activation of a switch (9). The switch (9) receives instructions to energise and/or de-energise the heating elements (3a, 3b, 3c) from a processor (8) .

A first interface (4) connects the processor (8) to the communication bus (13). The communication bus (13) advantageously is a digital communication bus. A second interface (10) connects the processor (8) to a sensor (10).

The present disclosure teaches a controller (1a; 1b) for managing an activation of at least one heating element (3a, 3b, 3c) within a thermal storage device (2a; 2b), the controller (1a; 1b) comprising:
a first interface (4) for receiving an enable signal regarding availability of power from a local supply of renewable power (6a, 6b, 6c) within a local grid (7) for take up by the thermal storage device (2a; 2b);
a second interface (10) for receiving a temperature signal from at least one sensor (11) within the thermal storage device (2a; 2b);
a processor (8) on receipt of the enable signal configured to:
   read the temperature signal via the second interface (10) and produce a measure of temperature from the temperature signal;
   compare the produced measure of temperature to a maximum temperature;
   if the produced measure of temperature is less than the maximum temperature:
      provide an activation signal;
      the controller (1a; 1b) further comprising a switch (9) in operative communication with the processor (8) and on receipt of the activation signal configured to activate the at least one heating element (3a, 3b, 3c).

The present disclosure also teaches a controller (1a; 1b) comprising:
a first interface (4) for receiving an enable signal regarding availability of power from a local supply of renewable power (6a, 6b, 6c) within a local grid (7) for take up by a thermal storage device (2a; 2b);
a second interface (10) for receiving a temperature signal from at least one sensor (11) within the thermal storage device (2a; 2b);
a processor (8) on receipt of the enable signal configured to:
   read the temperature signal via the second interface (10) and produce a measure of temperature from the temperature signal;
   compare the produced measure of temperature to a maximum temperature;
   if the produced measure of temperature is less than the maximum temperature:
      provide an activation signal;
      the controller (1a; 1b) further comprising a switch (9) in operative communication with the processor (8) and on receipt of the activation signal configured to activate at least one heating element (3a, 3b, 3c).

In addition to the aforementioned controllers (1a; 1b), the instant disclosure also teaches a method of managing an activation of at least one heating element (3a, 3b, 3c) within a thermal storage device (2a; 2b), the method comprising:
receiving an enable signal regarding availability of power from a local supply of renewable power (6a, 6b, 6c) within a local grid (7) for take up by the thermal storage device (2a; 2b);
receiving a temperature signal from at least one sensor (11) within the thermal storage device (2a; 2b);
producing a measure of temperature from the temperature signal;
comparing the produced measure of temperature to a maximum temperature;
if the produced measure of temperature is less than the maximum temperature:
   providing an activation signal;
   sending the activation signal to a switch (9);
   the switch (9) on receipt of the activation signal activating the at least one heating element (3a, 3b, 3c).

The present disclosure also pertains to a tangible machine-readable medium having a set of instructions stored thereon that when executed by one or more processors cause the one or more processors to perform the aforementioned method.

The present disclosure also teaches a tangible, machine-readable, non-transitory medium having a set of instructions stored thereon that when executed by one or more processors cause the one or more processors to perform the aforementioned method.

The thermal storage device (2a; 2b) advantageously comprises the at least one heating element (3a, 3b, 3c) and the at least one sensor (11).

In an embodiment, the aforementioned controller (1a; 1b) is suitable for controlling an activation of at least one heating element (3a, 3b, 3c).

The processor (8) is advantageously configured to:
determine whether to switch the at least one heating element (3a, 3b, 3c) to take up available power; and to
produce and/or provide the activation signal in positive response of the determination.

The local grid (7) preferably is a local electricity grid. The local grid (7) yet more preferably is a local electricity grid of a structure such as a building. The building can be a residential, a commercial, and/or an industrial building.

The local supply of renewable power (6a, 6b, 6c) advantageously is a local supply of renewable electric power. In an embodiment, the local supply of renewable power (6a, 6b, 6c) comprises a photovoltaic installation and/or at least one solar panel. In another embodiment, the local supply of renewable power (6a, 6b, 6c) comprises a wind turbine.

In an embodiment, the controller (1a; 1b) comprises a first interface (4) for receiving from a local power management system (5) a signal regarding availability of power from a local supply of renewable power (6a, 6b, 6c) within a local grid (7) for take up by the thermal storage device (2a; 2b). In an embodiment, the local power management system (5) is or comprises a local grid operator.

The switch (9) is ideally configured to connect, preferably to electrically connect, yet more preferably to directly electrically connect, to the at least one heating element (3a, 3b, 3c). It is envisaged that the switch (9) is configured to:
receive the activation signal from the processor (8), and to
close a contact in order to connect the at least one heating element (3a, 3b, 3c) to the local grid (7), thereby activating and/or energising the at least one heating element (3a, 3b, 3c). It is envisaged that the switch (9) comprises a contact such as a mechanical contact, the contact being selectively moveable between an open position and a closed position. It is particularly envisaged that the switch (9) comprises a contact such as a mechanical contact, the contact being selectively moveable between an open position breaking an electric current and a closed position making an electric current. In an embodiment, the switch (9) is or comprises an electric contactor. In another embodiment, the switch (9) is or comprises an insulated-gate bipolar transistor.

In an embodiment, the thermal storage device (2a; 2b) is or comprises a storage heater. In another embodiment, the thermal storage device (2a; 2b) is or comprises a boiler such as a water boiler.

According to an aspect of the present disclosure, the at least one heating element (3a, 3b, 3c) comprises a heating wire and/or a heat pump and/or an induction heater. According to a particular aspect of the present disclosure, the at least one heating element (3a, 3b, 3c) is a heating wire and/or is a heat pump and/or is an induction heater.

In an embodiment, the processor (8) is on receipt of the enable signal configured to:
produce the activation signal; and to
send the activation signal to the switch (9).

In a particular embodiment, the processor (8) comprises a third interface for sending the activation signal to the switch (9), the processor (8) being on receipt of the enable signal configured to:
produce the activation signal; and to
send the activation signal to the switch (9) via the third interface.

According to an aspect of the present disclosure, the processor (8) comprises a memory such as a non-volatile memory, the processor (8) being in operative communication with the memory, the processor (8) being on receipt of the enable signal configured to:
read the maximum temperature from the memory.

In an embodiment, the processor (8) comprises a microprocessor and/or a microcontroller. In a particular embodiment, the processor (8) is a microprocessor or is a microcontroller.

The at least one sensor (11) advantageously is a temperature sensor such as a PT100 sensor or a PT1000 sensor or a fibre optic sensor. The at least one sensor (11) yet more advantageously comprises a temperature sensor such as a PT100 sensor or a PT1000 sensor or a fibre optic sensor. Fibre optic sensors confer advantages in explosive and/or hazardous environments.

It is envisaged that the first interface (4) is configured to:
connect to a communication bus (13) such as a digital communication bus; and to
receive the enable signal from the communication bus (13) using a communication bus protocol such as a digital communication bus protocol.

A suitable wireless or hard-wired communication bus (13) can be employed to connect the first interface (4) to the power management system (5). The first interface (4) can, by way of non-limiting example, connect to the power management system (5) via a wireless local area network (WLAN) and/or via a Zigbee® wireless connection and/or via a telephony (global systems for mobile communications, GSM) network and/or via a proprietary wireless technique. Also, a concrete wall with high attenuation of radio frequency signals may hinder communication between the first interface (4) and the power management system (5). In order to overcome issues due to noise and/or due to attenuation, the first interface (4) and/or the power management system (5) can harness techniques such as phase-shift keying and/or redundant datagram packets of limited size.

The second interface (10) ideally is or comprises an analog-to-digital converter. In a compact embodiment, the second interface (10) and the processor (8) are arranged on the same system-on-a-chip.

The instant disclosure also teaches any of the aforementioned controllers (1a; 1b),
wherein the first interface (4) is configured to receive a disable signal regarding lack of power available from the local supply of renewable power (6a, 6b, 6c) within the local grid (7) ;
wherein the processor (8) is on receipt of the disable signal configured to:
provide a deactivation signal;
send the deactivation signal to the switch (9);
the switch(9) being on receipt of the deactivation signal configured to:
   deactivate the at least one heating element (3a, 3b, 3c).

In an embodiment, the first interface (4) is configured to receive from a local power management system (5) a signal regarding absence and/or lack of power available from the local supply of renewable power (6a, 6b, 6c) within the local grid (7). In an embodiment, the local power management system (5) is or comprises a local grid operator.

In an embodiment, the processor (8) is on receipt of the disable signal configured to:
produce and/or provide the deactivation signal; and to send the deactivation signal to the switch (9);
the switch (9) being on receipt of the deactivation signal configured to:
   deactivate and/or de-energise the at least one heating element (3a, 3b, 3c).

In a particular embodiment, the third interface of the processor (8) is configured to send the deactivation signal to the switch (9), the processor (8) being on receipt of the disable signal configured to:
produce and/or provide the deactivation signal; and to
send the deactivation signal to the switch (9) via the third interface;
the switch (9) being on receipt of the deactivation signal configured to:
   deactivate and/or de-energise the at least one heating element (3a, 3b, 3c).

The present disclosure further teaches any of the aforementioned controllers (1a; 1b), wherein the processor (8) comprises a third interface for unidirectional communication from the processor (8) to the switch (9), the processor (8) being on receipt of the enable signal configured to:
produce the activation signal; and to
send the activation signal to the switch (9) via the third interface.

Unidirectional communication from the processor (8) to the switch (9) confers advantages in terms of reduced system complexity.

The present disclosure further teaches any of the aforementioned controllers (1a; 1b),
wherein the second interface (10) is configured for unidirectional communication from the at least one sensor (11) to the processor (8); and
wherein the second interface (10) comprises a delta-sigma modulation circuit.

In a compact embodiment, the second interface (10) having the delta-sigma modulation circuit and the processor (8) are arranged on the same system-on-a-chip.

In an embodiment, the interface (10) and/or the processor (8) produce a measure of temperature from the temperature signal using the delta-sigma modulation circuit.

Use of delta-sigma modulation confers advantages in terms of substitution of frequency for voltage. Delta-sigma modulation thus affords transmission advantages of a pulse stream.

Unidirectional communication from the at least one sensor (11) to the processor (8) confers advantages in terms of reduced system complexity.

The present disclosure yet further teaches any of the aforementioned controllers (1a; 1b), wherein the first interface (4) is configured to:
connect to a communication bus (13);
receive the enable signal via the communication bus (13);
receive a start time signal regarding a start time of availability of power from the local supply of renewable power (6a, 6b, 6c) within the local grid (7) for take up by the thermal storage device (2a; 2b);
the processor (8) being on receipt of the enable signal configured to:
   produce a current time signal indicative of current time;
   compare the current time signal to the start time signal; and
   if the current time indicated by the current time signal is later than the start time indicated by the start time signal:
      provide the activation signal.

The processor (8) advantageously comprises a clock such as a complementary metal-oxide-semiconductor clock. The processor (8) then produces the current time signal indicative of current time using the clock. In a compact embodiment, the clock and the processor (8) are arranged on the same system-on-a-chip.

The instant disclosure still further teaches any of the aforementioned controllers (1a; 1b), wherein the first interface (4) is configured to:
connect to a communication bus (13);
receive the enable signal via the communication bus (13);
receive a key signal via the communication bus (13);
the processor (8) being on receipt of the enable signal configured to:
   produce an authentication signal as a function of the key signal;
   compare the authentication signal to a predefined signal; and
   if the authentication signal matches the predefined signal:
      provide the activation signal.

The instant disclosure also teaches any of the aforementioned controllers (1a; 1b), wherein the first interface (4) is configured to:
connect to a communication bus (13);
receive the enable signal via the communication bus (13);
receive a key signal via the communication bus (13);
the processor (8) being on receipt of the enable signal configured to:
   produce an authentication signal as a function of the key signal;
   compare the authentication signal to a predefined signal; and
   if the authentication signal equals the predefined signal:
      produce and/or provide the activation signal.

According to an aspect of the present disclosure, the processor (8) comprises a memory such as a non-volatile memory, the processor (8) being in operative communication with the memory, the processor (8) being on receipt of the enable signal configured to:
read the predefined signal from the memory.

In an embodiment, the processor (8) is configured to produce the authentication signal as a hash function of, preferably as a cryptographic hash function of, the key signal. The cryptographic hash function preferably implements at least one algorithm selected from:
- a message digest 5 algorithm;
- a secure hash algorithm no 1;
- a secure hash algorithm no 2;
- a secure hash algorithm no 3;
- a secure hash algorithm no 256; or
- a bcrypt algorithm.

In an alternate embodiment, the processor (8) is configured to produce an authentication signal as an identity function of the key signal.

The instant disclosure also teaches any of the aforementioned controllers (1a; 1b), wherein the processor (8) is on receipt of the enable signal configured to:
produce a delay signal indicative of a delay time; and to
provide the activation signal following expiry of a time interval indicated by the delay signal.

According to an aspect of the present disclosure, the processor (8) comprises a memory such as a non-volatile memory, the processor (8) being in operative communication with the memory, the processor (8) being on receipt of the enable signal configured to:
read the delay signal from the memory.

The instant disclosure also teaches any of the aforementioned controllers (1a; 1b) implementing the delay signal, wherein the processor (8) is on receipt of the enable signal configured to:
produce the delay signal indicative of a delay time, the delay time indicated by the delay signal being less than a maximum delay (time).

In a particular embodiment, the delay signal takes on a random value between a signal indicative of (a) zero delay time and a signal indicative of a maximum delay (time).

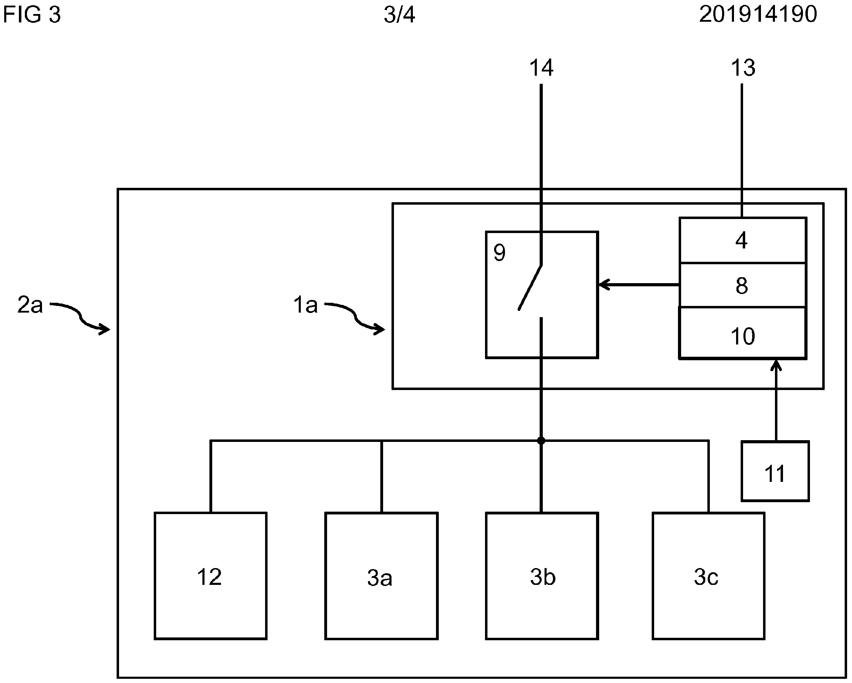

Now referring to FIG 3, an exemplary thermal storage device (2a) is shown. The thermal storage device (2a) of FIG 3 additionally comprises a cooling element (12). The cooling element (12) connects to the local grid (7) via the switch (9) .

The present disclosure further teaches any of the aforementioned controllers (1a; 1b), wherein the processor (8) is on receipt of the enable signal configured to:
compare the produced measure of temperature to a minimum temperature;
if the produced measure of temperature is higher than the minimum temperature:
   provide the activation signal;
   wherein the switch (9) is on receipt of the activation signal configured to:
      activate at least one cooling element (12) within the thermal storage device (2a; 2b).

It is envisaged that the switch (9) comprises an array of circuit breakers. A first circuit breaker from among the array of circuit breakers connects to the at least one cooling element (12). A second circuit breaker from among the array of circuit breakers connects to the at least one heating element (3a, 3b, 3c). The switch (9) is preferably configured to individually operate circuit breakers from among the array of circuit breakers based on the activation signal. The switch (9) is preferably also configured to individually operate circuit breakers from among the array of circuit breakers based on the deactivation signal.

It is envisaged that the at least one cooling element (12) is or comprises a thermoelectric member. It is also envisaged that the at least one cooling element (12) is or comprises a heat pump.

The thermal storage device (2a; 2b) advantageously comprises the at least one cooling element (12). According to an aspect of the present disclosure, the at least one cooling element (12) is a cooling element of an installation for heating, ventilation and/or air-conditioning. According to another aspect of the present disclosure, the at least one cooling element (12) is a cooling element of a freezer and/or of a fridge.

According to an aspect of the present disclosure, the processor (8) comprises a memory such as a non-volatile memory, the processor (8) being in operative communication with the memory, the processor (8) being on receipt of the enable signal configured to:
read the minimum temperature from the memory.

The instant disclosure also pertains to a thermal storage device (2a; 2b) comprising:
at least one heating element (3a, 3b, 3c) disposed inside the thermal storage device (2a; 2b);
at least one sensor (11) disposed inside the thermal storage device (2a; 2b); and
a controller (1a; 1b) as disclosed above, the switch(9) of the controller (1a; 1b) electrically connecting to the at least one heating element (3a, 3b, 3c) and the controller (1a; 1b) being in operative communication with the at least one sensor (11).

The instant disclosure further pertains to the aforementioned thermal storage device (2a; 2b), the device (2a; 2b) additionally comprising:
at least one cooling element (12) disposed inside the thermal storage device (2a; 2b); and
a controller (1a; 1b) connecting to a cooling element (12) as disclosed above, the switch (9) of the controller (1a; 1b) electrically connecting to the at least one cooling element (12) and the controller (1a; 1b) being in operative communication with the at least one sensor (11).

The thermal storage device (2a; 2b) advantageously is or comprises a freezer. In an embodiment, the thermal storage device (2a; 2b) is or comprises a fridge. In another embodiment, the thermal storage device (2a; 2b) comprises a heat pump. In yet another embodiment, the thermal storage device (2a; 2b) comprises a circuit for heating, ventilation and/or air-conditioning.

The instant disclosure still further pertains to any of the aforementioned thermal storage devices (2a; 2b), the thermal storage device (2a; 2b) comprising a housing,
wherein the at least one heating element (3a, 3b, 3c), the at least one sensor (11), and the controller (1a; 1b) are arranged inside the housing.

In an embodiment implementing the at least one cooling element (12), the at least one cooling element (12) is preferably also arranged inside the housing.

It is envisaged that the housing is an enclosure such as a common enclosure. In a particular embodiment, the housing is made of a metallic material such as steel and/or stainless steel and/or aluminum and/or an alloy thereof.

The present disclosure also deals with a local grid (7) comprising:
a power management system (5), a local supply of renewable power (6a, 6b, 6c), and at least one thermal storage device (2a; 2b) as taught above;
wherein the at least one thermal storage device (2a; 2b) electrically connects to the local grid (7);
wherein the first interface (4) of the at least one thermal storage device (2a; 2b) is in operative communication with the power management system (5).

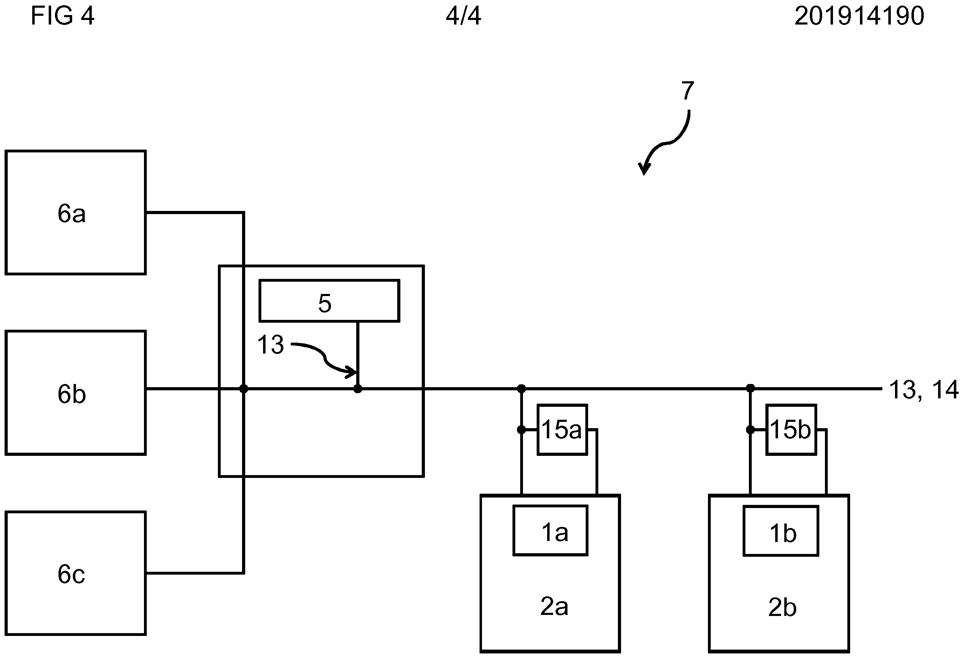

FIG 4 depicts a solution wherein the communication bus (13) comprises a section that is identical with the power bus (14). The power bus (14) thus carries modulated signals of the communication bus (13). The solution as shown on FIG 4 allows thermal storage devices (2a; 2b) to be simply plugged into an outlet with no need for a separate connection to a data network.

The present disclosure also deals with the aforementioned local grid (7), the local grid (7) comprising:
a tangible power connector (14), the tangible power connector electrically connecting the local supply of renewable power (6a, 6b, 6c) to the controller (1a; 1b) of the at least one thermal storage device (2a; 2b);
a communication bus (13), the first interface (4) of the at least one thermal storage device (2a; 2b) being in operative communication with the power management system (5) via the communication bus (13); and
wherein the tangible power connector (14) is configured to transmit data signals of the communication bus (13) along with electric power.

It is envisaged that the local grid (7) comprises a high-pass filter (15a; 15b) interposed between the tangible power connector (14) and the first interface (4). The first interface (4) of the at least one thermal storage device (2a; 2b) is in operative communication with the power management system (5) via the high-pass filter (15a; 15b). The communication bus (13) then comprises the tangible power connector (14) and the high-pass filter (15a; 15b).

In an embodiment, the tangible power connector (14) is or comprises a lead. In another embodiment, the tangible power connector (14) is or comprises a wire. In yet another embodiment, the tangible power connector (14) is or comprises a set of wires.

Any steps of a method according to the present disclosure may be embodied in hardware, in a software module executed by a processor, in a software module being executed using operating-system-level virtualization, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

### Reference numerals

1a, 1b controller
2a, 2b thermal energy storage device
3a, 3b, 3c heating element
4 first interface
5 power management system
6a, 6b, 6c local supply of renewable power
7 local grid
8 processor
9 switch
10 second interface
11 sensor
12 cooling element
13 communication bus
14 tangible power connector
15a, 15b high-pass filter

## Claims

1. A controller (1a; 1b) for managing an activation of at least one heating element (3a, 3b, 3c) within a thermal storage device (2a; 2b), the controller (1a; 1b) comprising:
a first interface (4) for receiving an enable signal regarding availability of power from a local supply of renewable power (6a, 6b, 6c) within a local grid (7) for take up by the thermal storage device (2a; 2b);
a second interface (10) for receiving a temperature signal from at least one sensor (11) within the thermal storage device (2a; 2b);
a processor (8) on receipt of the enable signal configured to:
read the temperature signal via the second interface (10) and produce a measure of temperature from the temperature signal;
compare the produced measure of temperature to a maximum temperature;
if the produced measure of temperature is less than the maximum temperature:
provide an activation signal;
the controller (1a; 1b) further comprising a switch (9) in operative communication with the processor (8) and on receipt of the activation signal configured to activate the at least one heating element (3a, 3b, 3c);
wherein the at least one thermal storage device (2a; 2b) electrically connects to the local grid (7);
**characterized in that**
the processor (8) is on receipt of the enable signal configured to:
compare the produced measure of temperature to a minimum temperature;
if the produced measure of temperature is higher than the minimum temperature:
provide a second activation signal;
wherein the switch (9) is on receipt of the second activation signal configured to:
activate at least one cooling element (12) within the thermal storage device (2a; 2b).

2. The controller (1a; 1b) according to claim 1,
wherein the first interface (4) is configured to receive a disable signal regarding lack of power available from the local supply of renewable power (6a, 6b, 6c) within the local grid (7);
wherein the processor (8) is on receipt of the disable signal configured to:
provide a deactivation signal;
send the deactivation signal to the switch (9);
the switch (9) being on receipt of the deactivation signal configured to:
deactivate the at least one heating element (3a, 3b, 3c).

3. The controller (1a; 1b) according to any of the claims 1 to 2, wherein the processor (8) comprises a third interface for unidirectional communication from the processor (8) to the switch (9), the processor (8) being on receipt of the enable signal configured to:
produce the activation signal; and to
send the activation signal to the switch (9) via the third interface.

4. The controller (1a; 1b) according to any of the claims 1 to 3,
wherein the second interface (10) is configured for unidirectional communication from the at least one sensor (11) to the processor (8); and
wherein the second interface (10) comprises a delta-sigma modulation circuit.

5. The controller (1a; 1b) according to any of the claims 1 to 4, wherein the first interface (4) is configured to:
connect to a communication bus (13);
receive the enable signal via the communication bus (13);
receive a start time signal regarding a start time of availability of power from the local supply of renewable power (6a, 6b, 6c) within the local grid (7) for take up by the thermal storage device (2a; 2b);
the processor (8) being on receipt of the enable signal configured to:
produce a current time signal indicative of current time;
compare the current time signal to the start time signal; and
if the current time indicated by the current time signal is later than the start time indicated by the start time signal:
provide the activation signal.

6. The controller (1a; 1b) according to any of the claims 1 to 5, wherein the first interface (4) is configured to:
connect to a communication bus (13);
receive the enable signal via the communication bus (13);
receive a key signal via the communication bus (13);
the processor (8) being on receipt of the enable signal configured to:
produce an authentication signal as a function of the key signal;
compare the authentication signal to a predefined signal; and
if the authentication signal matches the predefined signal:
provide the activation signal.

7. The controller (1a; 1b) according to any of the claims 1 to 6, wherein the processor (8) is on receipt of the enable signal configured to:
produce a delay signal indicative of a delay time; and to
provide the activation signal following expiry of a time interval indicated by the delay signal.

## Patentansprüche

1. Automatisierungsgerät (1a; 1b) zur Verwaltung einer Aktivierung von mindestens einem Heizelement (3a, 3b, 3c) innerhalb einer Wärmespeichervorrichtung (2a; 2b), wobei das Automatisierungsgerät (1a; 1b) Folgendes umfasst:
eine erste Schnittstelle (4) zum Empfangen eines Freigabesignals bezüglich der Verfügbarkeit von Energie von einer lokalen Quelle regenerativer Energie (6a, 6b, 6c) innerhalb eines lokalen Netzes (7) zur Aufnahme durch die Wärmespeichervorrichtung (2a; 2b);
eine zweite Schnittstelle (10) zum Empfangen eines Temperatursignals von mindestens einem Sensor (11) innerhalb der Wärmespeichervorrichtung (2a; 2b);
einen Prozessor (8), der dazu konfiguriert ist, bei Empfang des Freigabesignals:
das Temperatursignal über die zweite Schnittstelle (10) zu lesen und aus dem Temperatursignal einen Temperaturmesswert zu erzeugen;
den erzeugten Temperaturmesswert mit einer Höchsttemperatur zu vergleichen;
wenn der erzeugte Temperaturmesswert niedriger ist als die Höchsttemperatur:
ein Aktivierungssignal zu liefern;
wobei das Automatisierungsgerät (1a; 1b) ferner einen Schalter (9) umfasst, der mit dem Prozessor (8) in operativer Kommunikation steht und dazu konfiguriert ist, bei Empfang des Aktivierungssignals das mindestens eine Heizelement (3a, 3b, 3c) zu aktivieren;
wobei die mindestens eine Wärmespeichervorrichtung (2a; 2b) elektrisch mit dem lokalen Netz (7) verbunden ist;
**dadurch gekennzeichnet, dass**
der Prozessor (8) dazu konfiguriert ist, bei Empfang des Freigabesignals:
den erzeugten Temperaturmesswert mit einer Mindesttemperatur zu vergleichen;
wenn der erzeugte Temperaturmesswert höher ist als die Mindesttemperatur:
ein zweites Aktivierungssignal zu liefern;
wobei der Schalter (9) dazu konfiguriert ist, bei Empfang des zweiten Aktivierungssignals:
mindestens ein Kühlelement (12) innerhalb der Wärmespeichervorrichtung (2a; 2b) zu aktivieren.

2. Das Automatisierungsgerät (1a; 1b) nach Anspruch 1,
wobei die erste Schnittstelle (4) dazu konfiguriert ist, ein Sperrsignal bezüglich des Mangels an Energie von der lokalen Quelle regenerativer Energie (6a, 6b, 6c) innerhalb des lokalen Netzes (7) zu empfangen;
wobei der Prozessor (8) dazu konfiguriert ist, bei Empfang des Sperrsignals:
ein Deaktivierungssignal zu liefern;
das Deaktivierungssignal an den Schalter (9) zu senden;
wobei der Schalter (9) dazu konfiguriert ist, bei Empfang des Deaktivierungssignals:
das mindestens eine Heizelement (3a, 3b, 3c) zu deaktivieren.

3. Das Automatisierungsgerät (1a; 1b) nach einem der Ansprüche 1 bis 2, wobei der Prozessor (8) eine dritte Schnittstelle für unidirektionale Kommunikation von dem Prozessor (8) zu dem Schalter (9) umfasst, wobei der Prozessor (8) dazu konfiguriert ist, bei Empfang des Freigabesignals:
das Aktivierungssignal zu liefern; und
das Aktivierungssignal über die dritte Schnittstelle an den Schalter (9) zu senden.

4. Das Automatisierungsgerät (1a; 1b) nach einem der Ansprüche 1 bis 3,
wobei die zweite Schnittstelle (10) für unidirektionale Kommunikation von dem mindestens einem Sensor (11) zu dem Prozessor (8) konfiguriert ist; und
wobei die sie zweite Schnittstelle (10) eine Delta-Sigma-Modulationsschaltung umfasst.

5. Das Automatisierungsgerät (1a; 1b) nach einem der Ansprüche 1 bis 4, wobei die erste Schnittstelle (4) dazu konfiguriert ist:
mit einem Kommunikationsbus (13) verbunden zu werden;
das Freigabesignal über den Kommunikationsbus (13) zu empfangen;
ein Startzeitsignal bezüglich einer Startzeit der Verfügbarkeit von Energie von der lokalen Quelle regenerativer Energie (6a, 6b, 6c) innerhalb eines lokalen Netzes (7) zur Aufnahme durch die Wärmespeichervorrichtung (2a; 2b) zu empfangen;
wobei der Prozessor (8) dazu konfiguriert ist, bei Empfang des Freigabesignals:
ein aktuelles Zeitsignal zu erzeugen, das die aktuelle Zeit angibt;
das aktuelle Zeitsignal mit dem Startzeitsignal zu vergleichen; und
wenn die durch das aktuelle Zeitsignal angegebene aktuelle Zeit später ist als die durch das Startzeitsignal angegebene Startzeit:
das Aktivierungssignal zu liefern.

6. Das Automatisierungsgerät (1a; 1b) nach einem der Ansprüche 1 bis 5, wobei die erste Schnittstelle (4) dazu konfiguriert ist:
mit einem Kommunikationsbus (13) verbunden zu werden;
das Freigabesignal über den Kommunikationsbus (13) zu empfangen;
ein Schlüsselsignal über den Kommunikationsbus (13) zu empfangen;
wobei der Prozessor (8) dazu konfiguriert ist, bei Empfang des Freigabesignals:
ein Authentifizierungssignal als eine Funktion des Schlüsselsignals zu erzeugen;
das Authentifizierungssignal mit einem vordefinierten Signal zu vergleichen; und
wenn das Authentifizierungssignal mit dem vordefinierten Signal übereinstimmt:
das Aktivierungssignal zu liefern.

7. Das Automatisierungsgerät (1a; 1b) nach einem der Ansprüche 1 bis 6, wobei der Prozessor (8) dazu konfiguriert ist, bei Empfang des Freigabesignals:
ein Verzögerungssignal zu erzeugen, das eine Verzögerungszeit angibt; und
nach Ablauf eines von dem Verzögerungssignal angegebenen Zeitintervalls das Aktivierungssignal zu liefern.

## Revendications

1. Contrôleur (1a ; 1b) destiné à gérer une activation d'au moins un élément chauffant (3a, 3b, 3c) dans un dispositif de stockage thermique (2a ; 2b), le contrôleur (1a ; 1b) comprenant :
une première interface (4) destinée à recevoir un signal de validation concernant une disponibilité d'énergie, provenant d'une alimentation locale en énergie renouvelable (6a, 6b, 6c) dans un réseau électrique local (7), destinée à être absorbée par le dispositif de stockage thermique (2a ; 2b) ;
une deuxième interface (10) destinée à recevoir un signal de température en provenance d'au moins un capteur (11) dans le dispositif de stockage thermique (2a ; 2b) ;
un processeur (8) qui, suite à la réception du signal de validation, est configuré de manière à :
lire le signal de température, par l'intermédiaire de la deuxième interface (10), et produire une mesure de température à partir du signal de température ;
comparer la mesure de température produite à une température maximale ;
si la mesure de température produite est inférieure à la température maximale :
fournir un signal d'activation ;
le contrôleur (1a ; 1b) comprenant en outre un commutateur (9) en communication opérationnelle avec le processeur (8), et suite à la réception du signal d'activation, configuré de manière à activer ledit au moins un élément chauffant (3a, 3b, 3c) ;
dans lequel ledit au moins un dispositif de stockage thermique (2a ; 2b) se connecte électriquement au réseau électrique local (7) ;
**caractérisé en ce que** :
le processeur (8) est, suite à la réception du signal de validation, configuré de manière à :
comparer la mesure de température produite à une température minimale ;
si la mesure de température produite est supérieure à la température minimale :
fournir un second signal d'activation ;
dans lequel le commutateur (9) est, suite à la réception du second signal d'activation, configuré de manière à :
activer au moins un élément refroidissant (12) dans le dispositif de stockage thermique (2a ; 2b).

2. Le contrôleur (1a ; 1b) selon la revendication 1,
dans lequel la première interface (4) est configurée de manière à recevoir un signal d'invalidation concernant un manque d'énergie disponible à partir de l'alimentation locale en énergie renouvelable (6a, 6b, 6c) dans le réseau électrique local (7) ;
dans lequel le processeur (8) est, suite à la réception du signal d'invalidation, configuré de manière à :
fournir un signal de désactivation ;
envoyer le signal de désactivation au commutateur (9) ;
le commutateur (9) étant, suite à la réception du signal de désactivation, configuré de manière à :
désactiver ledit au moins un élément chauffant (3a, 3b, 3c) .

3. Le contrôleur (1a ; 1b) selon l'une quelconque des revendications 1 à 2, dans lequel le processeur (8) comprend une troisième interface pour une communication unidirectionnelle du processeur (8) au commutateur (9), le processeur (8) étant, suite à la réception du signal de validation, configuré de manière à :
produire le signal d'activation ; et
envoyer le signal d'activation, au commutateur (9), par l'intermédiaire de la troisième interface.

4. Le contrôleur (1a ; 1b) selon l'une quelconque des revendications 1 à 3,
dans lequel la deuxième interface (10) est configurée pour une communication unidirectionnelle dudit au moins un capteur (11) au processeur (8) ; et
dans lequel la deuxième interface (10) comprend un circuit de modulation delta-sigma.

5. Le contrôleur (1a ; 1b) selon l'une quelconque des revendications 1 à 4, dans lequel la première interface (4) est configurée de manière à :
se connecter à un bus de communication (13) ;
recevoir le signal de validation par l'intermédiaire du bus de communication (13) ;
recevoir un signal d'heure de début concernant une heure de début de disponibilité d'énergie, provenant de l'alimentation locale en énergie renouvelable (6a, 6b, 6c) au sein du réseau électrique local (7), destinée à être absorbée par le dispositif de stockage thermique (2a ; 2b) ;
le processeur (8) étant, suite à la réception du signal de validation, configuré de manière à :
produire un signal d'heure en cours indicatif d'une heure en cours ;
comparer le signal d'heure en cours au signal d'heure de début ; et
si l'heure en cours indiquée par le signal d'heure en cours est postérieure à l'heure de début indiquée par le signal d'heure de début :
fournir le signal d'activation.

6. Le contrôleur (1a ; 1b) selon l'une quelconque des revendications 1 à 5, dans lequel la première interface (4) est configurée de manière à :
se connecter à un bus de communication (13) ;
recevoir le signal de validation par l'intermédiaire du bus de communication (13) ;
recevoir un signal de clé par l'intermédiaire du bus de communication (13) ;
le processeur (8) étant, suite à la réception du signal de validation, configuré de manière à :
produire un signal d'authentification en fonction du signal de clé ;
comparer le signal d'authentification à un signal prédéfini ; et
si le signal d'authentification correspond au signal prédéfini :
fournir le signal d'activation.

7. Le contrôleur (1a ; 1b) selon l'une quelconque des revendications 1 à 6, dans lequel le processeur (8) est, suite à la réception du signal de validation, configuré de manière à :
produire un signal de retard indicatif d'un temps de retard ; et
fournir le signal d'activation, après l'expiration d'un intervalle de temps indiqué par le signal de retard.
